# EUROPÄISCHE PATENTSCHRIFT

(11) **EP 1 152 860 B1**
(45) Veröffentlichungstag und Bekanntmachung des Hinweises auf die Patenterteilung: **13.07.2005**
(21) Anmeldenummer: 00990526.6
(22) Anmeldetag: 13.12.2000
(51) Int. Cl.: B23H 3/04, B23H 3/06

(54) **ELEKTRODE ZUM ELEKTROCHEMISCHEN FEINBOHREN VON WERKSTÜCKEN SOWIE VERFAHREN ZU IHRER HERSTELLUNG**
ELECTRODE FOR ELECTROCHEMICALLY FINEBORING WORKPIECES AND METHOD FOR PRODUCING THE SAME
ELECTRODE DESTINEE AU PERCAGE ELECTROCHIMIQUE DE PRECISION DE PIECES ET SON PROCEDE DE PRODUCTION

(30) Priorität: 16.12.1999 DE 19960790
(43) Veröffentlichungstag der Anmeldung: 14.11.2001
(73) Patentinhaber: MTU Aero Engines GmbH, 80995 München (DE)
(72) Erfinder: PLATZ, Albin, 86510 Ried-Baindlkirch (DE); RAGER, Konrad, 85235 Pfaffenhofen/Glonn (DE)
(86) Internationale Anmeldenummer: PCT/DE2000/004420
(87) Internationale Veröffentlichungsnummer: WO 2001/043909

(56) Entgegenhaltungen:
- US-A- 3 352 770
- US-A- 3 485 744
- US-A- 3 676 310
- US-A- 4 806 721

## Beschreibung

Die Erfindung betrifft eine Elektrode zum elektrochemischen Feinbohren von Werkstücken, umfassend ein elektrisch leitendes (Elektroden-)Rohr zum Durchleiten eines Elektrolyts zu einem zu bearbeitenden Werkstück, das mit dem Elektrolyten in Verbindung steht, wobei das (Elektroden-) Rohr außer an dem dem Werkstück zugeordneten Ende an seiner Außenfläche mit seiner nichtleitenden Isolierschicht versehen ist, sowie ein Verfahren zur Herstellung einer Elektrode zum elektrochemischen Feinbohren von Werkstücken.

Eine bekannte Elektrode zum elektrochemischen Bohren umfasst ein in einer Aufnahmeeinrichtung befestigtes Glasrohr aus SiO₂ -Glas, durch welches ein Elektrolyt strömt. Der Elektrolyt wird durch eine der Aufnahmeeinrichtung gegenüberliegenden Öffnung in dem Glasrohr in Kontakt mit dem durch Bohren zu bearbeitenden Bereich eines Werkstücks gebracht. In dem Glasrohr ist ein elektrischer Leiter angeordnet, an der über eine Gleichstromquelle eine negative elektrische Ladung angelegt, ist. An dem Werkstück ist die entgegengesetzte, positive Ladung angelegt damit an dem zu bearbeitenden Bereich des Werkstücks aufgrund einer chemischen Reaktion ein Materialabtrag erfolgt. Der elektrische Leiter besteht im allgemeinen aus einem Metall, wie einem Platindraht.

Nachteilig dabei ist, dass beim Einsatz von Glasrohren mit dem elektrochemischen Bohren lediglich Löcher bzw. Bohrungen mit einem minimalen Durchmesser von 0,2 mm erzielt werden können. Zudem ist die Elektrode aus einem Glasrohr und darin angeordnetem Draht relativ kompliziert und empfindlich aufgebaut.

US 3,352,770 offenbart eine Elektrode zum elektrochemischen Feinbohren mit einem Rohr zum Durchleiten eines Elektrolyten zu einem zu bearbeitenden Werkstück, wobei das Rohr aus einem Metall oder einer Metalllegierung besteht und mit einer Isolierschicht versehen ist. Auch hier können nur Löcher mit größerem Durchmesser erzeugt werden.

Aus US 4,806,721 geht ein Draht für die Elektroerosion als bekannt hervor, bei dem eine Seele aus einem amorphen Metall verwendet wird, welche mit einem elektrisch leitfähigen Metall beschichtet wird, über das der elektrische Stromfluss und somit die Entladung bewerkstelligt wird.

Das der Erfindung zugrundeliegende Problem besteht darin, eine Elektrode der eingangs beschriebenen Gattung zu schaffen, mit der Löcher bzw. Bohrungen mit möglichst kleinem Durchmesser bei einem möglichst einfachen Elektrodenaufbau herzustellen sind. Zudem soll ein Verfahren zur Herstellung einer solchen Elektrode bereitgestellt werden.

Die Lösung des Problems ist erfindungsgemäß dadurch gekennzeichnet, dass das (Elektroden-)Rohr aus einem Metall mit im wesentlichen amorpher Struktur besteht.

Vorteilhaft bei einer Elektrode aus einem solchen Rohr ist, dass sich Metalle mit im wesentlicher amorpher Struktur, sog. metallische Gläser, zu Rohren mit verhältnismäßig kleinen Aussendurchmessern im Bereich von 0,2 mm bis 0,04 mm verarbeiten lassen. Aus Metall mit im wesentlichen amorpher Struktur hergestellte Rohre sind korrosions- und verschleißbeständig und weisen eine nahezu glatte und fehlerfreie Oberfläche auf, an der die Strömung der Elektrolyten optimal ist. Zudem kann auf das Einbringen eines metallischen Leiters, wie eines Platindrahts, verzichtet werden, da die negative Ladung einer Gleichstromquelle an das Rohr selbst angelegt wird. Die positive Ladung der Gleichstromquelle wird an das zu bearbeitende Werkstück angelegt.

Der Aussendurchmesser des Rohrs kann maximal geringfügig kleiner als 0,2 mm sein und liegt bevorzugt im Bereich von 0,2 mm bis 0,04 mm, so dass im wesentlichen Löcher bzw. Bohrungen mit einem Durchmesser von 0,2 mm und kleiner hergestellt werden können.

Das Rohr kann eine beliebige Querschnittsgeometrie aufweisen und verschiedenen Anwendungsfällen angepasst werden, so dass auch Löcher mit nicht kreisförmigem Querschnitt in dem Werkstück ausgebildet werden können.

Das Rohr kann ferner aus einem metallischen Massivglas, wie einer ZrTiNiCuBe-Legierung, bestehen, wobei auch geeignete andere Legierungen, und somit andere Metalle, mit im wesentlichen amorpher Struktur eingesetzt werden können.

Die nichtleitende Isolierschicht kann eine Schicht auf einer AION- oder TiAlON- oder organischen-, wie Lacke, oder anorganischen Oxidkeramik-Basis sein, wobei deren Schichtdicke sehr klein ist. Die Dicke der Isolierschicht kann kleiner als 10 µm sein und liegt im allgemeinen zwischen 4 µm und 10 µm. Bei einer Isolierschicht auf TiAlON-Basis kann die Schicht auf das Rohr aus einem Metall mit im wesentlichen amorphen Struktur gesputtert oder gedampft sein.

Die mit der nichtleitenden Isolierschicht versehenen Abschnitte des Rohres können mit einer elektrisch leitenden Metall- oder Graphitschicht versehen sein, an die als sog. Schutzstromelektrode eine entgegengesetzte Ladung wie an das Rohr aus einem Metall mit im wesentlichen amorphen Struktur angelegt sein kann.

Die das Verfahren zur Herstellung einer Elektrode zum elektrochemischen Feinbohren betreffende Lösung des Problems ist erfindungsgemäß dadurch gekennzeichnet, dass als Werkstoff für das elektrisch leitende Elektrodenrohr ein Metall mit im wesentlichen amorpher Struktur bereitgestellt wird und das Elektrodenrohr durch Glasziehen aus einem Halbzeug-Rohr mit größerem Aussendurchmesser auf einen kleineren Aussendurchmesser gezogen wird.

Weitere Ausgestaltungen der erfindungsgemäßen Elektrode bzw. des erfindungsgemäßen Verfahrens sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: eine elektrochemische Bohranordnung mit einer Elektrode aus dem Stand der Technik;
- Fig. 2: eine elektrochemische Feinbohreinrichtung gemäß einer Ausgestaltung der erfindungsgemäßen Elektrode und
- Fig. 3: eine elektrochemische Feinbohranordnung gemäß einer alternativen Ausgestaltung der erfindungsgemäßen Elektrode.

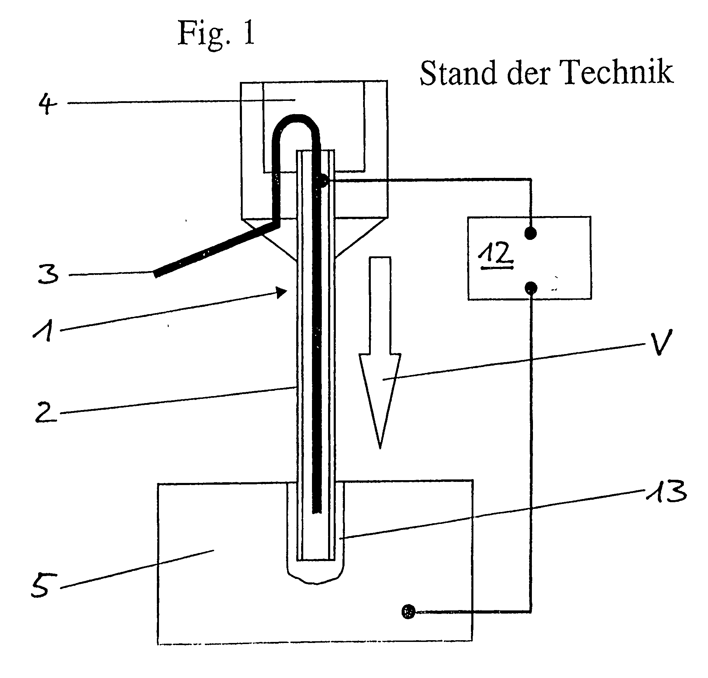

Fig. 1 zeigt schematisch eine elektrochemische Bohranordnung aus dem Stand der Technik mit einer Elektrode 1 aus einem Glasrohr 2 und einem darin angeordneten, als elektrischer Leiter dienenden Platindraht 3. Durch das Glasrohr 2 strömt ein Elektrolyt 4, der stirnseitig in einem durch elektrochemisches Bohren zu bearbeitenden Bereich eines Werkstücks 5 austritt. An den Platindraht 3 und das Werkstück 5 werden über eine Gleichstromquelle 12 entgegengesetzte Ladungen angelegt, so dass die für das elektrochemische Bohren erforderliche chemische Reaktion unter Austausch von Elektronen stattfindet. Es wird an den Platindraht 3 eine negative und an das Werkstück 5 eine positive Ladung angelegt. Während des Bohrens wird die Elektrode 1 in Richtung des Pfeiles V bewegt.

Bei Einsatz eines Glasrohres sind die mit dem elektrochemischen Bohrverfahren herzustellenden Bohrungen 13 im Werkstück 5 auf einen minimalen Durchmesser von 0,2 mm beschränkt. Zudem ist der Aufbau der das Glasrohr 2 und den darin angeordneten Platindraht 3 umfassenden Elektrode 1 kompliziert und empfindlich.

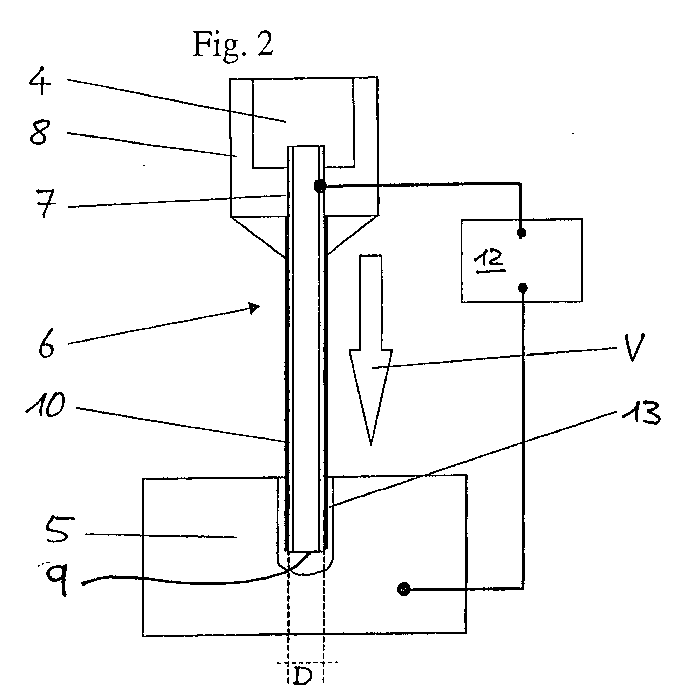

Fig. 2 zeigt schematisch eine elektrochemische Feinbohranordnung gemäß einer Ausgestaltung der erfindungsgemäßen, im ganzen mit 6 bezeichneten Elektrode, die im wesentlichen aus einem (Elektroden-)Rohr 7 aus einem Metall mit im wesentlichen amorpher Struktur, wie z.B. einer ZrTiNiCuBe-Legierung, besteht. Das Rohr 7 besitzt einen Aussendurchmesser D, der kleiner als 0,2 mm ist und je nach Größe der gewünschten Bohrung 13 im Werkstück 5 im Bereich zwischen 0,2 mm und 0,04 mm liegt. Von einer Gleichstromquelle 12 wird an das elektrische Rohr 7 und das Werkstück 5 jeweils eine entgegengesetzte elektrische Ladung angelegt, wobei an das Rohr 7 eine negative und an das Werkstück 5 eine positive Ladung angelegt wird.

Durch das Rohr 7 strömt ein Elektrolyt 4 von einer Aufnahmeeinrichtung 8 zu einer Öffnung 9 des Rohrs 7 und kommt dort mit dem durch elektrochemisches Bohren abzutragenden Bereich des Werkstücks 5 in Kontakt, um das Material des Werkstücks 5 unter Ablauf einer üblichen chemischen Reaktion mit Elektronenaustausch abzutragen. Das Rohr 7 ist in der Aufnahmeeinrichtung 8, durch die der Elektrolyt 4 dem Rohr 7 zugeführt wird, in üblicher Weise befestigt.

An der gesamten Aussenfläche des Rohrs 7 ist eine nichtleitende Isolierschicht 10 aufgebracht, um eine elektrochemische Korrosion oder einen zusätzlichen, unerwünschten Abtrag beim Feinbohren an der Wandung der Bohrung 13 zu verhindern. Durch die Isolierschicht 10 ist gewährleistet, dass dort kein Stromdurchgang erfolgt und somit weder Korrosion noch ein unerwünschter Abtrag von Material auftritt. Die chemische Reaktion erfolgt ausschließlich im Bereich der Öffnung 9 des Rohrs 7 und führt zu einem Materialabtrag und einer Vertiefung der Bohrung 13. Die Isolierschicht 10 ist eine gesputterte oder gedampfte Schicht eines Mischoxids, z.B. auf einer TiAlON-Basis, und besitzt eine Schichtdicke, die im allgemeinen kleiner als 10 µm ist und somit den gewünschten kleinen Aussendurchmesser des Rohrs 7 lediglich in geringfügiger Weise erhöht.

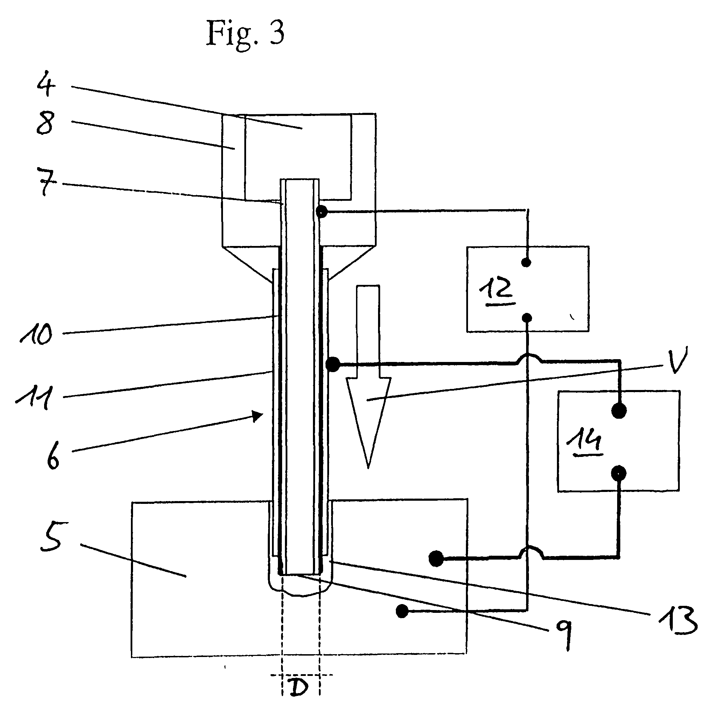

Fig. 3 zeigt schematisch eine alternative Ausgestaltung der erfindungsgemäßen, im ganzen mit 6 bezeichneten Elektrode, bei der ein (Elektroden-)Rohr 7 aus einem elektrisch leitenden Metall mit im wesentlichen amorpher Struktur besteht. Das Rohr 7 ist in einer Aufnahmeeinrichtung 8 gehalten, von der ihr ein Elektrolyt 4 zugeführt wird. Der Elektrolyt 4 strömt durch das Rohr 7 und tritt an eine Öffnung 9 des Rohrs 7 an dem zu bearbeitenden Bereich eines Werkstücks 5 aus. Über eine Gleichstromquelle 12 ist an das elektrisch leitende Rohr 7 eine negative und das Werkstück 5, in das eine Bohrung 13 durch elektrochemisches Feinbohren eingebracht werden soll, eine positive Ladung angelegt. An einer Aussenfläche des Rohrs 7 ist eine nichtleitende Isolierschicht 10 auf Basis einer Oxidkeramik, wie z.B. Al₂ O₃, aufgebracht, damit dort kein Stromdurchgang erfolgt. Hier soll z.B. eine elektrochemische Korrosion oder ein zusätzlicher, unerwünschter Materialabtrag im Bereich der Wandung der Bohrung 13 im Werkstück 5 verhindert werden.

Das Rohr 7 besitzt einen Aussendurchmesser D von 0,09 mm, so dass unter Berücksichtigung der Dicke der Isolierschicht 10 von etwa 7 µm eine Bohrung 13 von geringfügig über 0,09 mm hergestellt wird. Der Materialabtrag erfolgt daher ausschließlich im Bereich der Öffnung 9 des Rohres 7 unter Ablauf einer üblichen chemischen Reaktion mit Elektronenaustausch, da der Elektrolyt einerseits mit dem elektrisch leitenden Rohr 7 und andererseits mit dem ebenfalls elektrisch leitenden Werkstück 5 in Verbindung steht. Während des Bohrvorgangs wird die Elektrode 6 in Richtung des Pfeiles V bewegt, um die gewünschte Tiefe der Bohrung 13 zu erzielen. Aufgrund der Isolierschicht 10 tritt an der Wandung der Bohrung 13 kein unerwünschter Marterialabtrag auf.

In der vorliegenden Ausgestaltung ist auf die Isolierschicht 10 eine elektrisch leitende Metallschicht 11 als sog. Schutzstromelektrode aufgebracht, an die über eine Gleichstromquelle 14 eine positive, d.h. entgegengesetzte Ladung wie an das Rohr 7 angelegt ist, um so das Anätzen bzw. die ungewollte Aufweitung der Wandung der Bohrung 13 im Werkstück 5 zusätzlich zu verhindern. Alternativ kann als Schutzstromelektrode auch eine andere elektrisch leitende Schicht 11, wie z.B. eine Graphitschicht aufgebracht werden. Die entgegengesetzte, negative Ladung wird von der Gleichstromquelle 14 an dem Werkstück 5 angelegt.

Die in Fig. 2 und 3 dargestellte Elektrode 6 zum elektrochemischen Feinbohren in Werkstücken wird in der Weise hergestellt, dass als Werkstoff für das elektrisch leitende Elektrodenrohr 7 ein Metall mit im wesentlichen amorpher Struktur, d.h., ein sog. metallisches Glas wie z.B. eine ZrTiNiCuBe-Legierung, bereitgestellt wird und das Elektrodenrohr 6 durch Glasziehen aus einem Halbzeug-Rohr mit größerem Aussendurchmesser auf einen Aussendurchmesser D im Bereich von 0,2 mm bis 0,04 mm in einer Schutzgasatmosphäre gezogen wird. Daran anschließend wird auf die Aussenfläche des so hergestellten Elektrodenrohrs 6 eine Isolierschicht 10 aufgebracht, so dass beim Feinbohren einer Bohrung 13 in ein Werkstück 5 ausschließlich im Bereich der Öffnung 9 des Elektrodenrohrs 6 ein Stromdurchgang infolge des dort austretenden Elektrolyten 4 auftritt. Die Isolierschicht 10 besteht im wesentlichen aus AlON, TiAlON oder einer Oxidkeramik. Bei der in Fig. 3 dargestellten Elektrode 6 wird anschließend auf die Isolierschicht 10 noch eine elektrisch leitende Metall-oder Graphitschicht 11 z.B. durch Sputtern oder Aufdampfen aufgebracht, die als Schutzstromelektrode dient.

## Patentansprüche

1. Elektrode (6) zum elektrochemischen Feinbohren von Werkstücken, umfassend ein elektrisch leitendes (Elektroden-)Rohr (7) zum Durchleiten eines Elektrolyten (4) zu einem zu bearbeitenden Werkstück (5), das mit dem Elektrolyten (4) in Verbindung steht, wobei das (Elektroden-) Rohr (7) außer an dem dem Werkstück zugeordneten Ende an seiner Außenfläche mit einer nichtleitenden Isolierschicht (10) versehen ist, **dadurch gekennzeichnet, dass** das (Elektroden-) Rohr (7) aus einem Metall mit im wesentlichen amorpher Struktur besteht.

2. Elektrode (6) nach Anspruch 1, **dadurch gekennzeichnet, dass** der Aussendurchmesser (D) des (Elektroden-) Rohrs (7) zwischen 0,2 mm und 0,04 mm beträgt.

3. Elektrode (6) nach Anspruch 1 oder 2, **dadurch gekennzeichnet, dass** das (Elektroden-) Rohr (7) eine beliebige Querschnittsgeometrie aufweist.

4. Elektrode (6) nach einem oder mehreren der vorhergehenden Ansprüche, **dadurch gekennzeichnet, dass** das (Elektroden-) Rohr (7) aus einer ZrTiNiCuBe-Legierung besteht.

5. Elektrode (6) nach einem oder mehreren der vorhergehenden Ansprüche, **dadurch gekennzeichnet, dass** die Isolierschicht (10) im wesentlichen aus AlON oder TiAlON oder einer organischen Basis, wie Lacke, oder einer anorganischen Oxidkeramik besteht.

6. Elektrode (6) nach einem oder mehreren der vorhergehenden Ansprüche, **dadurch gekennzeichnet, dass** die Dicke der Isolierschicht (10) im Bereich von 4 µm bis 10 µm liegt.

7. Elektrode (6) nach einem oder mehreren der vorhergehenden Ansprüche, **dadurch gekennzeichnet, dass** auf die Isolierschicht (10) wenigstens abschnittsweise eine elektrisch leitende Metall- oder Graphitschicht (11) aufgebracht ist.

8. Verfahren zum Herstellen einer Elektrode (6) zum elektrochemischen Feinbohren, wobei die Elektrode (6) ein elektrisch leitendes (Elektroden-) Rohr (7) zum Durchleiten eines Elektrolyten (4) zu einem zu bearbeitenden Werkstück (5), das mit dem Elektrolyten (4) in Verbindung steht umfasst, **dadurch gekennzeichnet, dass** als Werkstoff für das (Elektroden-) Rohr (7) ein Metall mit im wesentlichen amorpher Struktur bereitgestellt wird und das (Elektroden-) Rohr (7) durch Glasziehen aus einem Rohr mit größerem Aussendurchmesser auf einen kleineren Aussendurchmesser (D) gezogen wird.

9. Verfahren nach Anspruch 8, **dadurch gekennzeichnet, dass** das Glasziehen in einer Schutzgasatmosphäre durchgeführt wird.

10. Verfahren nach Anspruch 8 oder 9, **dadurch gekennzeichnet, dass** das (Elektroden-) Rohr mit grösserem Aussendurchmesser auf einen Aussendurchmesser (D) des Elektrodenrohrs (7) im Bereich von 0,2 mm bis 0,04 mm gezogen wird.

11. Verfahren nach einem oder mehreren der Ansprüche 8 bis 10 **dadurch gekennzeichnet, dass** auf die Isolierschicht (10) wenigstens abschnittsweise eine elektrisch leitende Metall- oder Graphitschicht (11) aufgebracht wird.

## Claims

1. Electrode (6) for electrochemically fine-boring workpieces, comprising an electro-conductive (electrode) tube (7) through which an electrolyte (4) is guided to a workpiece (5) to be treated, which is connected to the electrolyte (4), the (electrode) tube (7) being provided with a non-conductive insulating layer (10) on its outer surface, apart from at the end that is operatively associated with the workpiece, **characterised in that** the (electrode) tube (7) is made from a metal with a substantially amorphous structure.

2. Electrode (6) according to claim 1, **characterised in that** the external diameter (D) of the (electrode) tube (7) is between 0.2 mm and 0.04 mm.

3. Electrode (6) according to claim 1 or 2, **characterised in that** the (electrode) tube (7) has any desired cross-sectional geometry.

4. Electrode (6) according to one or more of the preceding claims, **characterised in that** the (electrode) tube (7) is made from a ZrTiNiCuBe alloy.

5. Electrode (6) according to one or more of the preceding claims, **characterised in that** the insulating layer (10) consists essentially of AlON or TiAlON or an organic base such as lacquers, or of an inorganic oxide ceramic material.

6. Electrode (6) according to one or more of the preceding claims, **characterised in that** the thickness of the insulating layer (10) is within the 4 µm to 10 µm range.

7. Electrode according to one or more of the preceding claims, **characterised in that** an electro-conductive metallic or graphite coating (11) is applied to the insulating layer (10), at least in sections.

8. Method for producing an electrode (6) for electrochemical fine-boring, the electrode (6) comprising an electro-conductive (electrode) tube (7) through which an electrolyte (4) is guided to a workpiece (5) to be treated, which is connected to the electrolyte (4), **characterised in that** a metal with a substantially amorphous structure is provided as the material for the (electrode) tube (7) and that the (electrode) tube (7) is drawn by glass-drawing from a tube with a larger external diameter to a smaller external diameter (D).

9. Method according to claim 8, **characterised in that** the glass-drawing is carried out in a protective atmosphere.

10. Method according to claim 8 or 9, **characterised in that** the (electrode) tube with the larger external diameter is drawn to an external diameter (D) of the electrode tube (7) within the 0.2 mm to 0.04 mm range.

11. Method according to one or more of claims 8 to 10, **characterised in that** an electro-conductive metallic or graphite coating (11) is applied to the insulating layer (10), at least in sections.

## Revendications

1. Electrode (6) pour le perçage électrochimique de précision de pièces d'oeuvre, comprenant un tube (d'électrode) électriquement conducteur (7) servant à conduire un électrolyte (4) vers une pièce d'oeuvre à usiner (5) qui est en liaison avec l'électrolyte (4), le tube (d'électrode) (7) étant muni, outre à l'extrémité dirigée vers la pièce d'oeuvre, d'une couche isolante non conductrice (10) sur sa surface externe, **caractérisée en ce que** le tube (d'électrode) (7) est fait d'un métal ayant une structure essentiellement amorphe.

2. Electrode (6) selon la revendication 1, **caractérisée en ce que** le diamètre extérieur (D) du tube (d'électrode) (7) se situe dans la plage de 0,2 mm à 0,04 mm.

3. Electrode (6) selon la revendication 1 ou la revendication 2, **caractérisée en ce que** le tube (d'électrode) (7) présente une section transversale de géométrie quelconque.

4. Electrode (6) selon l'une ou plusieurs des revendications précédentes, **caractérisée en ce que** le tube (d'électrode) (7) se compose d'un alliage ZrTiNiCuBe.

5. Electrode (6) selon l'une ou plusieurs des revendications précédentes, **caractérisée en ce que** la couche isolante (10) se compose essentiellement d'AlON ou de TiAlON ou d'une base organique telle qu'une laque ou d'une céramique à base d'oxydes inorganiques.

6. Electrode (6) selon l'une ou plusieurs des revendications précédentes, **caractérisée en ce que** l'épaisseur de la couche isolante (10) se situe dans la plage de 4 µm à 10 µm.

7. Electrode (6) selon l'une ou plusieurs des revendications précédentes, **caractérisée en ce qu'**une couche de métal électriquement conducteur ou de graphite (11) est déposée au moins par tronçons sur la couche isolante (10).

8. Procédé de fabrication d'une électrode (6) pour le perçage électrochimique de précision, l'électrode (6) comprenant un tube (d'électrode) électriquement conducteur (7) servant à conduire un électrolyte (4) vers une pièce d'oeuvre à usiner (5) qui est en liaison avec l'électrolyte (4), **caractérisé en ce que**, comme matériau pour le tube (d'électrode) (7), on prépare un métal ayant une structure essentiellement amorphe et on étire le tube (d'électrode) (7) par tirage en partant d'un tube ayant un diamètre extérieur plus grand pour obtenir un diamètre extérieur (D) plus petit.

9. Procédé selon la revendication 8, **caractérisé en ce que** le tirage se fait sous une atmosphère de gaz protecteur.

10. Procédé selon la revendication 8 ou la revendication 9, **caractérisé en ce que** le tube (d'électrode) ayant un diamètre extérieur plus grand est étiré à un diamètre extérieur (D) du tube d'électrode (7) dans la plage de 0,2 mm à 0,04 mm.

11. Procédé selon l'une ou plusieurs des revendications 8 à 10, **caractérisé en ce qu'**une couche de métal électriquement conducteur ou de graphite (11) est déposée au moins par tronçons sur la couche isolante (10).
